# EUROPÄISCHE PATENTSCHRIFT

(11) **EP 3 628 489 B1**
(45) Veröffentlichungstag und Bekanntmachung des Hinweises auf die Patenterteilung: **20.01.2021**
(21) Anmeldenummer: 19193721.8
(22) Anmeldetag: 27.08.2019
(51) Int. Cl.: B41F 33/00, B41F 33/14

(54) **REGISTERMESSUNG OHNE REGISTERMARKEN**
REGISTER MEASUREMENT WITHOUT REGISTER MARKS
MESURE DE REGISTRE SANS MARQUE

(30) Priorität: 26.09.2018 DE 102018216442
(43) Veröffentlichungstag der Anmeldung: 01.04.2020
(73) Patentinhaber: Heidelberger Druckmaschinen AG, 69115 Heidelberg (DE)
(72) Erfinder: Fergen, Immanuel, 76229 Karlsruhe (DE); Schumann, Frank, 69118 Heidelberg (DE)

(56) Entgegenhaltungen:
- DE-A1-102014 223 579
- US-A1- 2002 178 952

## Beschreibung

Die vorliegende Erfindung beschäftigt sich mit einem Verfahren zur automatisierten Registermessung einem Druckprozess einer Druckmaschine.

Die Erfindung liegt im technischen Gebiet der Druckqualitätskontrolle.

Bei der Durchführung von Druckprozessen ist die anschließende Qualitätskontrolle der erzeugten Druckprodukte ein sehr wichtiger Bestandteil. Ein bedeutender Bestandteil dieser Druckqualitätskontrollen ist die Überprüfung des so genannten Registers - je nach Begriffsdeutung auch als Passer bekannt. Der Register bezeichnet in der klassischen Sichtweise dabei allgemein die Lage des Sujets auf dem Drucksubstrat, während Passer den Übereinanderdruck einzelner Farbauszüge im Mehrfarbendruck meint. Insbesondere bei einem solchen Mehrfarbendruck mit verschiedenen Farbauszügen, bei denen die einzelnen Farbauszüge genau übereinander gedruckt werden müssen, kann eine Verschiebung des Sujets bzw. einzelner Druckobjekte im Druckbild einzelner Farbauszüge dazu führen, dass es zu den sogenannten Passerfehlern kommt. Diese Art der Verschiebungen, welche man auch als Registerversatz bezeichnen kann, lässt sich dabei in Umfangs- und Seitenregister unterteilen. Der Umfangsregisterversatz bezeichnet dabei eine Verschiebung eines bestimmten Farbauszuges nach oben oder unten, relativ zu den anderen Farbauszügen gesehen. Das Seitenregister bezeichnet dagegen eine entsprechende Verschiebung nach links oder rechts relativ zu den anderen Farbauszügen. Ein weiterer Registerversatz betrifft das so genannte Diagonalregister.

Zur Ermittlung dieser Registerversätze werden üblicherweise Testmuster / -marken neben das eigentliche Druckbild als Teil des Sujets gedruckt. Diese Registermarken bestehen z. B. aus Objekten der einzelnen Farbauszüge in einer bestimmten geometrischen Anordnung. Damit lässt sich im Falle eines Registerversatzes eines oder mehrerer Farbauszüge sofort ermitteln, welcher Farbauszug den Versatz aufweist und welche Art die Abweichung genau ist. Die Auswertung der gedruckten Registermarke kann manuell durch einen Anwender erfolgen. Wesentlich üblicher ist heutzutage jedoch die automatisierte Auswertung; z.B. durch einen eigenen spezifischen Registersensor welcher die Registermarken erfasst und einem Rechner zuleitet, der sie hinsichtlich eines möglichen Registerversatzes auswertet. Auch die Verwendung eines Bilderfassungssystems, welches eigentlich für die Qualitätskontrolle des Drucksujets verwendet wird und meist innerhalb der Druckmaschine nach dem letzten Druckwerk inline angebracht ist, ist bekannt. Wurde der Registerversatz ermittelt, kann entweder manuell der Anwender bzw. Drucker oder automatisiert die Steuerung der Druckmaschine den Registerversatz ausgleichen. Dies geschieht z.B. indem die Druckbilddaten der einzelnen Farbauszüge entsprechend gegenläufig angepasst werden. Auch mechanische Anpassungen mittels Korrektur der Umfangs-, Seiten- und Diagonalregister durch den Anwender sind bis zu einem gewissen Grad möglich.

Nachteilig an diesen Lösungen zur Ermittlung des Registerversatzes ist jedoch, dass meist ein komplett eigenes Auswertungssystem mit Registersensor und eigenen Registermarken, welche vom Registersensor ausgelesen werden, notwendig ist. Um diesen Aufwand zu reduzieren, werden oft, wie bereits erwähnt, andere Bildsensoren oder Kameras deren Aufgabe z.B. die Überprüfung der Druckqualität hinsichtlich des Bildinhaltes oder die Farbkontrolle darstellt, zur Auswertung der Registermarken verwendet. Dies ist jedoch nur dann möglich, wenn diese Kameras über eine genügend hohe Bildauflösung verfügen, so dass sie auch die Registermarken zielgenau erfassen und auswerten können.

Weiterhin ist aus dem Stand der Technik das deutsche Patent DE 10 2004 021 597 B4 bekannt, welches eine Registermarke offenbart, welche durch einen Registersensor ausgelesen wird, wobei die Registermarke jedoch zusätzlich ein weiteres Feld zur Farbmessung der zu regelnden Registerfarbe enthält. In diesem Fall ist also die Auswertung des Registerversatzes mit der Farbkontrolle bzw. Farbsteuerung des Druckprozesses verbunden. Hier wird der Registersensor verwendet, um nicht nur den Registerversatz aus der Registermarke auszulesen, sondern ebenfalls den Farbwert des entsprechenden Farbauszuges. Die hier vorgestellte Registermarke ist also quasi ein Hybrid aus Registermarke und Farbmessfeld, bzw. Farbkontrollstreifen. Mit dieser Lösung wird somit der Aufwand der Farbkontrolle reduziert, nicht jedoch jener für die Ermittlung des Registerversatzes. Zudem ist es oft auch nicht gewünscht, Registerversatz und Farbsteuerung derart zu verbinden, da dieser Ansatz insbesondere bei sehr hohen Qualitätsanforderungen an die Farbsteuerung keine optimalen Ergebnisse liefert Dokument US-A-2002 178952 beschreibt ein Verfahren gemäß Oberbegriff von Anspruch 1.

Die Aufgabe der vorliegenden Erfindung besteht somit darin, ein Verfahren zur automatisierten Registermessung zu offenbaren, welches effizienter und mit weniger Aufwand als die aus dem Stand der Technik bekannten Verfahren verbunden ist.

Gelöst wird diese Aufgabe durch ein Verfahren zur automatisierten Registermessung von Farbauszügen in einem Druckprozess durch einen Rechner, wobei durch mindestens einen Bildsensor mindestens ein Testmuster erfasst und in einem digitalen Gesamtbild gespeichert wird, der Rechner das erfasste Testmuster hinsichtlich eines Registerversatzes auswertet und diesen korrigiert, wobei der Rechner als Testmuster einen Farbkontrollstreifen verwendet und die Farbmessfelder des Farbkontrollstreifens so anpasst, dass aus dem mittels Bilderfassungssystem erfassten und digitalisierten Farbkontrollstreifen Umfangs- und Seitenregisterversatz ermittelt werden können und welches dadurch gekennzeichnet ist, dass der Rechner zur Messung des Seitenregisterversatzes die Reihenfolge der Farbmessfelder des Farbkontrollstreifens auf die Sichtbarkeit eines Übereinanderdrucks der Farbmessfelder anpasst. Kern des erfindungsgemäßen Verfahrens ist es, dass hier auf ein eigenes System zur Auswertung des Registerversatzes mittels eigener Registermarke und eigenem Registersensor komplett verzichtet werden kann. Dies geschieht, indem man das vorhandene Bilderfassungssystem, mit welchem die Kontrolle des Bildinhaltes bzw. die Farbsteuerung anhand der Erfassung und Messung von Farbmess- oder Farbkontrollstreifen erfasst und ausgewertet wird für die Zwecke der Registermessung mit verwendet. Damit die automatisierte Auswertung der Farbmesswerte des Farbkontrollstreifens für diesen Zweck verwendet werden kann, sind bestimmte Anpassungen der einzelnen Farbmesswerte des Kontrollstreifens notwendig. Mit diesen Anpassungen kann anhand des gespeicherten digitalen Farbkontrollstreifens der Rechner nicht nur die einzelnen Farbwerte zur Farbsteuerung des Druckprozesses ermitteln, sondern aus den gleichen Testfeldern ebenfalls Informationen hinsichtlich des Registerversatzes der einzelnen Farbauszüge gewinnen. Damit ist der Einsatz eines eigenen Registersensors sowie einer eigenen Registermarke mit deren unabhängiger Auswertung nicht mehr erforderlich. Zur Bestimmung des Seitenregisterversatzes ist eine spezifische Anpassung der Farbmesswerte des Farbkontrollstreifens notwendig. Da im Gegensatz zum Umfangsregisterversatz der Seitenregisterversatz nicht ermittelt werden kann, wenn z. B. der Cyan-Farbauszug so nach links versetzt ist, dass das entsprechende Farbmessfeld für Cyan in einen Übereinanderdruck mit dem schwarzen Farbmessfeld gerät, ist es notwendig, hier die Reihenfolge der entsprechenden Farbmessfelder anzupassen. Für eine Überprüfung eines Seitenregisterversatzes für den Cyan-Farbauszug muss also das Farbmessfeld für Cyan im Farbkontrollstreifen an eine Stelle gesetzt werden, wo es im Falle einer Verschiebung durch einen Seitenregisterversatz nicht mit einem Farbmessfeld für Schwarz übereinanderdruckt. Ein Übereinanderdruck mit einem anderen Farbmessfeld z. B. für Yellow ist dagegen nicht problematisch, da hier weiterhin der Grad der Abweichung des Farbmessfeldes für Cyan bestimmt werden kann.

Vorteilhafte, daher bevorzugte Weiterbildungen dieser Erfindung ergeben sich aus den zugehörigen Unteransprüchen sowie aus der Beschreibung und den zugehörigen Zeichnungen.

Eine bevorzugte Weiterbildung des erfindungsgemäßen Verfahrens ist dabei, dass der Rechner den Umfangsregisterversatz durch Messung eines vertikal zum Farbkontrollstreifen auftretenden Höhenversatzes eines Farbmessfeldes im digitalisierten Farbkontrollstreifen ermittelt. Der Umfangsregisterversatz, welcher wie bereits erläutert, die Abweichung eines Farbauszugs nach oben oder unten relativ zu den anderen Farbauszügen beziffert, lässt sich relativ einfach durch Messung eines in diesem Falle auftretenden Höhenversatzes des betreffenden Farbmessfeldes für den entsprechenden Farbauszug ermitteln.

Eine weitere bevorzugte Weiterbildung des erfindungsgemäßen Verfahrens ist dabei, dass für jeden Farbauszug mehrere Farbmessfelder und/oder Farbkontrollstreifen gedruckt, erfasst, digitalisiert und vom Rechner ausgewertet werden um eine Mittelung der Ergebnisse über mehrere Farbmessfelder zu gewährleisten. Die Messung und Ermittlung der Registerversätze für die Farbauszüge kann bei Auswertung lediglich eines einzelnen Farbmessfeldes pro Farbauszug ungenau sein. Daher bietet es sich an, für denen Farbauszug mehrere Farbmessfelder entsprechend zu vermessen und auszuwerten. Dies stellt kein Problem dar, da üblicherweise jeder Farbkontrollstreifen sowieso mehrere Farbmessfelder für jeden Farbauszug enthält, bzw. es sind bevorzugt solche Farbkontrollstreifen zu verwenden. Sind aus irgendwelchen Gründen doch Farbkontrollstreifen zu verwenden, welche lediglich ein Farbmessfeld pro Farbauszug aufweisen, so sind mehrere Farbkontrollstreifen zu drucken und auszuwerten. Auch dies entspricht ohnehin dem Normalfall bei einem Druckprozess, da ohnehin auf jedem Drucksubstrat meist mindestens ein Farbkontrollstreifen gedruckt wird und ohnehin die Registermessung über den Verlauf mehrerer Druckbogen geschieht.

Eine weitere bevorzugte Weiterbildung des erfindungsgemäßen Verfahrens ist dabei, dass rechteckig geformte Farbmessfelder gedruckt, erfasst, im digitalen Gesamtbild gespeichert und ausgewertet werden. Die Verwendung von rechteckigen Farbmessfeldern bietet sich besonders an, da ohnehin die meisten verwendeten Farbkontrollstreifen über rechteckige Farbmessfelder verfügen.

Eine weitere bevorzugte Weiterbildung des erfindungsgemäßen Verfahrens ist dabei, dass runde Farbmessfelder gedruckt, erfasst, im digitalen Gesamtbild gespeichert und ausgewertet werden. Alternativ können jedoch auch rund geformte Farbmessfelder gedruckt werden. Dies stellt für die Auswertung kein Problem dar, da zwar die Pixel des Kamerasensors rechteckig sind, jedoch der Messfleck im Objektiv der verwendeten Kameras bzw. Farbmessgeräte rund ist. Außerdem bietet die Verwendung von runden Farbmessfeldern neue Optionen hinsichtlich des Auswerteverfahrens.

Eine weitere bevorzugte Weiterbildung des erfindungsgemäßen Verfahrens ist dabei, dass die runden Farbmessfelder ausgewertet werden, indem der Rechner ein Teilbild aus dem erfassten digitalen Gesamtbild ausschneidet, welches das Farbmessfeld für den zu messenden Farbauszug und die rechts und links anschließenden Farbauszüge enthält, das Teilbild in drei Objekte segmentiert, durch die konkaven Kreisteile des mittleren Objektes einen Hilfskreis legt und durch die Differenz der Lage des Mittelpunktes des Hilfskreises und des Mittelpunkt einer bekannten Sollposition des runden Farbmessfeldes das Seiten- und Umfangsregister ermittelt. Vorteil dieses neuen Auswerteverfahrens, welches mit rund geformten Farbmessfeldern arbeitet, liegt in der Hauptsache darin, dass ein Übereinanderdruck mit benachbarten Farbmessfeldern hier kein Problem mehr darstellt. Dadurch, dass für die Ermittlung von Seiten- und Umfangsregister ohnehin der Mittelpunkt des Hilfskreises entscheidend ist, welcher zudem mit einem äußerst robusten Verfahren ermittelt wird, spielt es keine Rolle, ob links oder rechts liegende Teile des runden Farbmessfeldes durch den Seitenregisterversatz überdruckt worden sind. Die Anpassung der Reihenfolge der einzelnen Farbmessfelder ist bei Anwendung dieses Verfahrens also nicht mehr notwendig - allerdings stört es auch nicht.

Eine weitere bevorzugte Weiterbildung des erfindungsgemäßen Verfahrens ist dabei, dass die Segmentierung des Teilbildes in drei Objekte mittels des Rechners durch einen Watershed-Algorithmus geschieht und/oder der Durchmesser des Hilfskreises vorher fest definiert wird. Der Durchmesser des Hilfskreises muss natürlich vorher festgelegt und bekannt sein, sonst funktioniert das Verfahren nicht. Bezüglich der Segmentierung des Teilbildes hat sich die Anwendung eines Watershed Algorithmus' als bevorzugte Art, die entsprechenden drei Farbmessfelder voneinander zu segmentieren, herausgestellt. Insbesondere bei einem stärkeren Übereinanderdruck zwischen dem zentralen auszuwertenden runden Farbmessfeld und einem benachbarten Farbmessfeld bietet dieser Algorithmus sehr gute Ergebnisse.

Eine weitere bevorzugte Weiterbildung des erfindungsgemäßen Verfahrens ist dabei, dass die Sollposition des Farbmessfeldes durch die Lage der nächsten, angrenzenden schwarzen Farbmessfelder bestimmt wird. Zur Ermittlung der Soll-Position werden daher zunächst die Positionen der beiden benachbarten, nächstliegenden Farbmessfelder für Schwarz ermittelt. Aufgrund ihrer bekannten Lage lässt sich die Soll-Position des zu untersuchenden Farbmessfeldes bzw. Farbauszuges ermitteln. Schwarz gilt also entsprechend als Referenzfarbe für die Registermessung.

Eine weitere bevorzugte Weiterbildung des erfindungsgemäßen Verfahrens ist dabei, dass zur Erfassung und Digitalisierung der Testmuster ein Inline-Bilderfassungssystem in der Druckmaschine verwendet wird, welches aus mindestens einer Kamera besteht. Da das Ziel des erfindungsgemäßen Verfahrens in der Reduzierung von Aufwand, insbesondere durch den Verzicht auf eigene Registermarken und einen eigenen Registersensor, besteht, bietet es sich als erstes an zur Erfassung und Digitalisierung der Testmuster bzw. Farbkontrollstreifen ein Inlinebilderfassungssystem in der Druckmaschine zu verwenden, sofern dieses existiert. Voraussetzung hierfür ist natürlich, dass dieses Inlinebilderfassungssystem auch zur Auswertung der Farbkontrollstreifen verwendet wird, bzw. werden kann. Ist dies nicht der Fall, so wird für das erfindungsgemäße Verfahren natürlich die Kamera bzw. der Bildsensor verwendet, mit welchem die Farbkontrollstreifen ausgewertet werden. Trifft jedoch der Sonderfall zu, dass ein Inlinebilderfassungssystem existiert, jedoch für die Erfassung und Digitalisierung der Farbkontrollstreifen nicht verwendet wird und das zusätzlich der verwendete Bildsensor, mit welchem die Farbkontrollstreifen ausgelesen wird, für die Bilderfassung hinsichtlich Registermessung nicht geeignet ist, so muss selbstverständlich das Inlinebilderfassungssystem der Druckmaschine so konfiguriert werden, dass es in diesem Fall die Farbkontrollstreifen zusätzlich miterfasst, um damit die Daten zur Auswertung des Registerversatzes dem Rechner zu Verfügung gestellt werden können. In der überwiegenden Mehrzahl der Fälle ist jedoch davon auszugehen, dass das Inlinebilderfassungssystem auch standardmäßig zur Auswertung der Farbkontrollstreifen verwendet wird.

Zudem besteht eine weitere Lösung der gestellten Aufgabe in einem Farbkontrollstreifen, welcher für die Durchführung des beschriebenen, erfindungsgemäßen Verfahrens zur automatisierten Registermessung in einem Druckprozess einer Druckmaschine eingerichtet ist. Der Farbkontrollstreifen ist also so aufgebaut, dass er aus rechteckigen oder kreisrunden Farbmessfeldern besteht, welche hinsichtlich ihrer Reihenfolge und ihrer Anzahl sowie ihrer sonstigen Struktur zur Durchführung des erfindungsgemäßen Verfahrens geeignet sind.

Die Erfindung als solche sowie konstruktiv und funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind aneinander entsprechende Elemente mit jeweils denselben Bezugszeichen versehen.

Die Zeichnungen zeigen:
- Figur 1:: Umfangs- und Seitenregistermessung mit rechteckigen Farbmessfeldern
- Figur 2:: Herkömmlicher Farbkontrollstreifen
- Figur 3:: Modifizierter Farbkontrollstreifen - Reihenfolge der Farbmessfelder optimiert für Registermessung
- Figur 4:: Modifizierter Farbkontrollstreifen mit Seitenregisterversatz in Cyan und Magenta
- Figur 5:: Messung des Seitenregisters für Cyan
- Figur 6:: Modifizierter Farbkontrollstreifen mit kreisrunden Farbmessfeldern und Registerversatz in Cyan, Magenta und Yellow
- Figur 7:: Umfangs und Seitenregistermessung mit kreisrunden Farbmessfeldern
- Figur 8:: Verfahrensschritt 1: Teilbild erstellen
- Figur 9a, 9b:: Verfahrensschritt 2 + 3: zentrales Farbmessfeld extrahieren und einen Hilfskreis vorgegebener Größe durch die konvexen Objektlinien legen
- Figur 10:: Verfahrensschritt 4: Bestimmung der Sollposition für Seiten- und Umfangsregister
- Figur 11:: Verfahrensschritt 5: durch die Differenz in der Lage des Mittelpunktes des approximierten Kreises und den Mittelpunkt der Sollposition des Farbmessfeldes ist das Seiten- und Umfangsregister bestimmbar
- Figur 12:: schematischer Aufbau des Bilderfassungssystems

Die Erfindung kommt ohne spezielle Registermessfelder aus. Damit kann der Platz für die Registermessfelder anders verwendet werden. Dies führt dazu, dass z.B. eine Nutzenreihe mehr gedruckt werden kann. Durch den Wegfall der Registermessfelder können zudem die Farbmessstreifen 1 dichter gepackt werden, wodurch in vielen Druckprozessen aus einem Doppelmessstreifen ein einfacher Messtreifen 1 werden kann. Dies führt wiederum in einigen Fällen dazu, dass eine weitere Nutzenreihe mehr auf dem Bogen platziert werden kann. Außerdem wird die Genauigkeit der Registermessung erhöht, da das Register 2, 3 in sehr vielen Feldern gemessen werden kann und diese Messwerte gemittelt werden können.

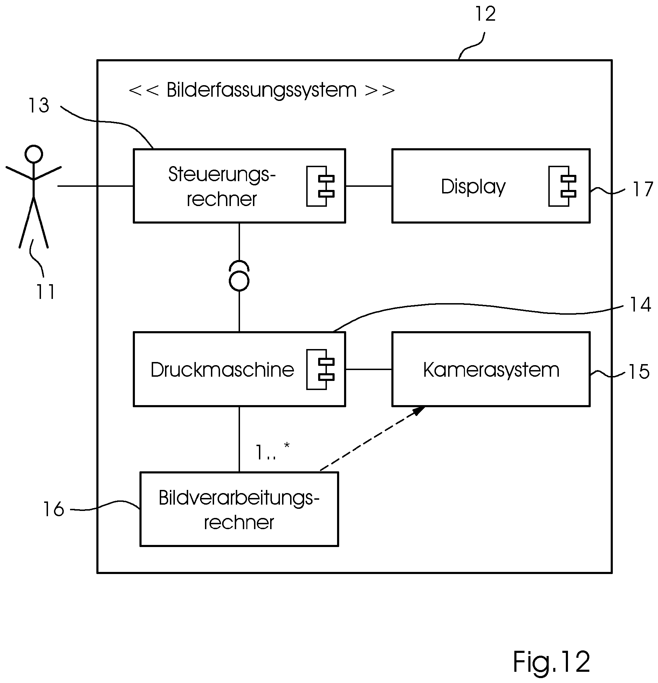

Verfügt die Druckmaschine 14 über ein eingebautes Bilderfassungssystem 12 mit üblicherweise mehreren Kameras 15 sowie einem eigenen Bildverarbeitungsrechner 16 als Messsystem 12, wie Inkjet- und Offsetdruckmaschinen 14 der höheren Preis-/Performancekategorie mittlerweile der Fall, so können die Bilder von dessen Kameras 15 zu einer Registermessung herangezogen werden und der Anwender 11 braucht nicht mehr eine separate, nachgelagerte Auswertung einzuleiten. Figur 12 zeigt schematisch den strukturellen Aufbau eines solchen Bilderfassungssystems 12, welches das erfindungsgemäße Verfahren einsetzt. Es besteht aus mindestens einem Bildsensor 15, üblicherweise einer Kamera 15, welche in die Druckmaschine 14 integriert ist. Die mindestens eine Kamera 15 nimmt die von der Druckmaschine 14 erzeugten Druckbilder auf und sendet die Daten an einen Rechner 13, 16 zur Auswertung. Dieser Rechner 13, 16 ist bevorzugt ein eigener separater Rechner 16, z.B. ein oder mehrere spezialisierte Bildverarbeitungsrechner 16, kann aber auch mit dem Steuerungsrechner 13 der Druckmaschine 4 identisch sein. Mindestens der Steuerungsrechner 13 der Druckmaschine 14 besitzt ein Display 17, auf welchem die Ergebnisse der Bildinspektion angezeigt werden.

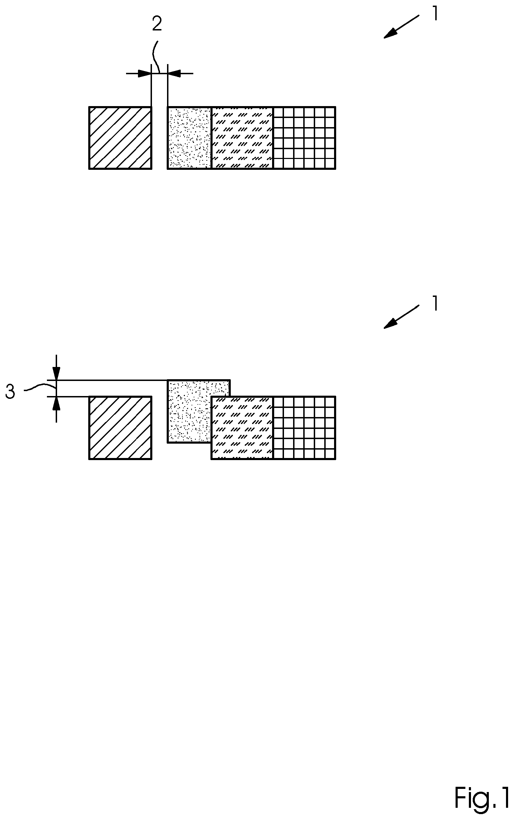

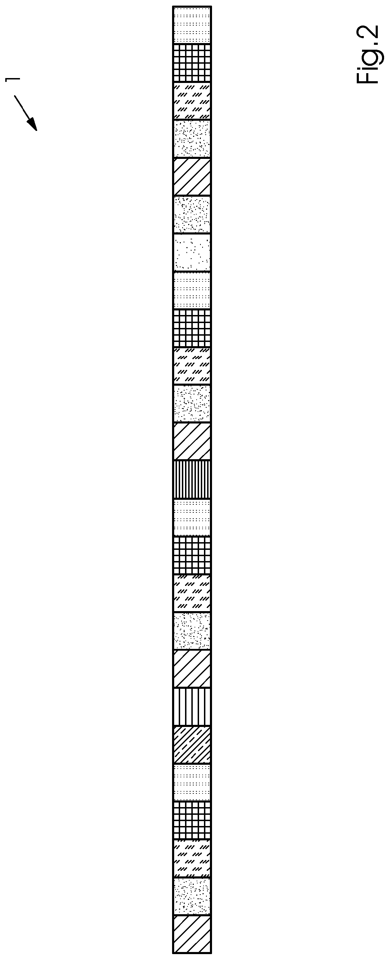

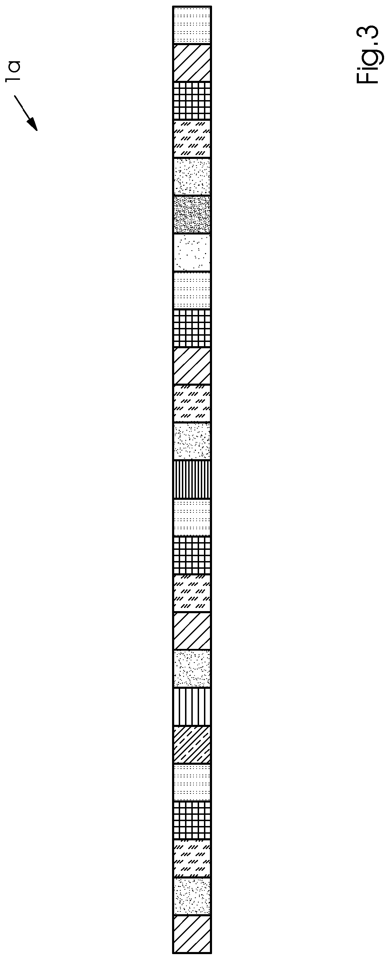

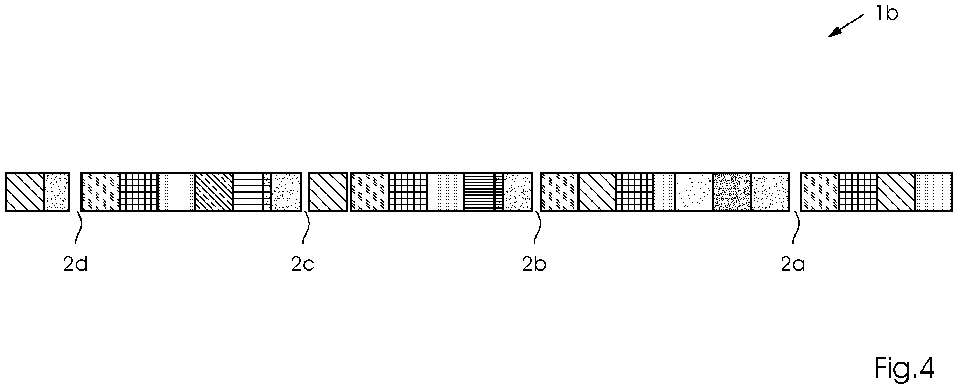

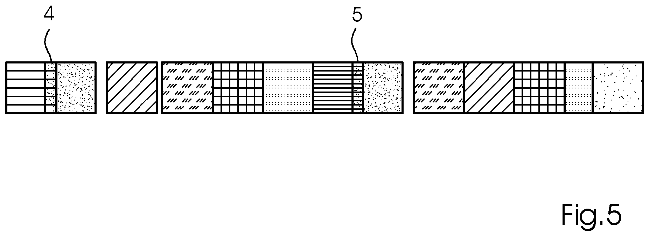

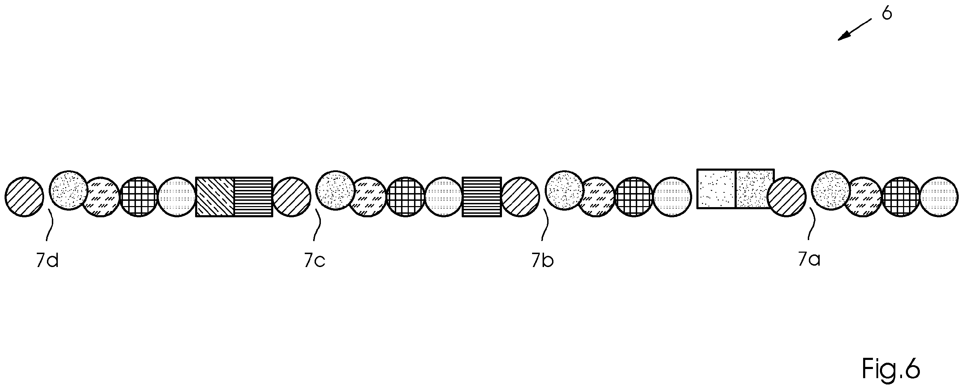

Aus den bereits vorhandenen rechteckigen Farbmessfeldern in einem Farbmessstreifen 1 werden in einer ersten, bevorzugten Ausführungsvariante dann durch den Bildverarbeitungsrechner 13 die für die Registermessung notwendigen Daten ermittelt. Insgesamt ist von Vorteil, dass die Farbmessfelder mehrfach auf dem Bogen vorhanden sind und so eine Mittelung der Messwerte erfolgen kann. Wichtig ist nun der Unterschied bei der Messung des Umfangsregisters 3 und Seitenregisters 2. Das Umfangsregister 3 kann immer ohne Einschränkungen gemessen werden. Beim Seitenregister 2 ist dies nicht gegeben, da die Farbmessfelder direkt aneinander stoßen und es so zu Überdruckeffekten 4, 5 kommen kann, sh. Figur 1. Alle weiteren Betrachtungen beziehen sich nur auf das Seitenregister 2. Folgende Fälle sind zu unterscheiden:
1. Alle Register 2, 3 sind optimal eingestellt. Die Größe der gemessenen Farbmessfelder ist gleich groß und das Messsystem 12 kann die korrekte Einstellung des Registers 2, 3 bestätigen.
2. Eine der Farben weist einen Seitenregisterversatz 2 auf. Bei herkömmlichen Farbkontrollstreifen 1, sh. Figur 2, ist nun nicht eindeutig festzustellen, welche der gedruckten Farben einen Seitenregisterversatz 2 aufweist, da sich die Farbmessfelder überlappen 4, 5. Deshalb wird eine veränderte Anordnung der Farbmessfelder im Farbkontrollstreifen 1a vorgeschlagen, wie sie in Figur 3 zu sehen ist. So ist immer eine eindeutige Messung des Seitenregisterversatzes 2 messbar, siehe Figur 5.
3. Mehrere Farben weisen einen Seitenregisterversatz 2 auf, sh. Figur 4 wo ein solcher Farbkontrollstreifen 1b mit angepasster Messfeld-Reihenfolge und Seitenregisterversatz 2a, 2b, 2c, 2d in Cyan und Magenta dargestellt ist. Bei herkömmlichen Farbkontrollstreifen 1, sh. Figur 2, ist nun nicht eindeutig festzustellen, welche der gedruckten Farben einen Seitenregisterversatz 2 aufweist, da sich die Farbmessfelder überlappen. Mit dem modifizierten Farbkontrollstreifen 1a ist auch dieser Fall messbar, wie in Figur 5 und 6 zu sehen ist.

Die Registermesswerte können in einer alternativen Ausführungsvariante auch in den heutigen Farbkontrollstreifen 1 ermittelt werden, wenn man mit Farbfiltern bei der Bildaufnahme arbeitet. Der Problemfall des seitlichen Übereinanderdrucks 4, 5 wird dann durch die Farbfilter, einschließlich einer Analyse der Graustufen, hinreichend gut erkannt, wodurch die Messwerte den Farbmessfeldern zugeordnet werden können.

In einer weiteren bevorzugten Ausführungsvariante, wird zudem vorgeschlagen die rechteckigen Farbmessfelder in kreisrunde Farbmessfelder zu ändern. Diese Farbmessfelder im Farbkontrollstreifen 6 werden dann für die Farbmessung und die Registermessung genutzt. Dabei ist von Vorteil, dass die Farbmessfelder mehrfach auf dem Bogen vorhanden sind und so eine Mittelung der Messwerte erfolgen kann. Figur 6 zeigt einen solchen modifizierten Farbkontrollstreifen 6 mit kreisrunden Farbmessfeldern und Registerversatz in Cyan, Magenta und Yellow 7a, 7b, 7c, 7d.

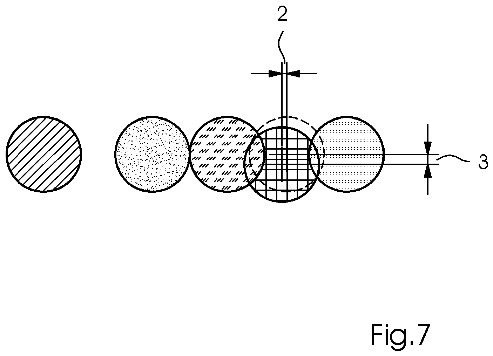

Da der Messfleck der Farbmessgeräte rund ist macht eine Änderung der Farbmessfelder von rechteckig auf rund keinen Unterschied für die Farbmessung. Für die Registermessung ist es dadurch aber möglich auch bei größerem Registerversätzen 2, 3, welche einen signifikanten Übereinanderdruck 4, 5 von Farben im Farbkontrollstreifen 6 beinhaltet, das Umfangs- 3, Seiten- 2 und Diagonalregister zu messen. In Figur 7 ist gut zu erkennen, wie selbst starke Umfangs- und Seitenregisterversätze 7a, 7b, 7c, 7d in einem solchen modifizierten Farbkontrollstreifen 6 mit kreisrunden Messfeldern bestimmt werden können.

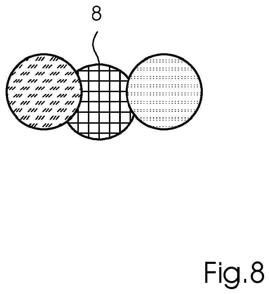

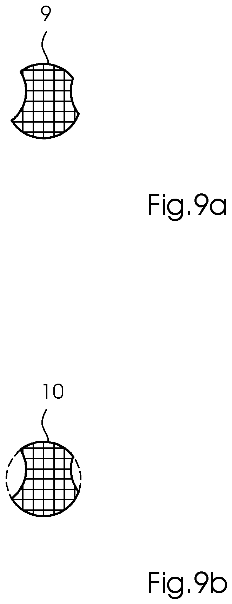

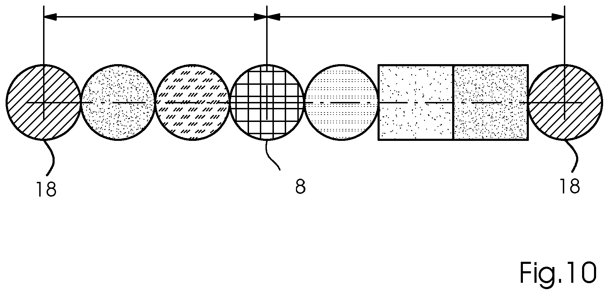

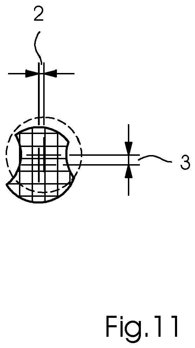

Dazu wird folgendes Verfahren offenbart (hier am Beispiel eines gelben Farbmessfeldes 8):
1. Es wird ein Teilbild aus dem Gesamtbild ausgeschnitten, dass das Farbmessfeld Yellow 8 für die zu messende Farbe und die rechts und links anschließenden Farben enthält, sh. Figur 8.
2. Durch den Watershed-Algorithmus wird das Bild segmentiert und es werden 3 Objekte erkannt. Die Objekte rechts und links werden verworfen. Übrig bleibt ein Objekt, das nur das segmentierte, zu messende Farbmessfeld Yellow 9 enthält, sh. Figur 9a.
3. Durch die konkaven Kreisteile des Objektes 10 kann nun ein Hilfskreis gelegt werden. Der Durchmesser des Hilfskreises ist vorher definiert und fix, sh. Figur 9b.
4. Die Sollposition des Farbmessfeldes 8 ist durch die Lage der angrenzenden schwarzen Farbmessfelder 18 bestimmt, wie man in Figur 10 gut erkennen kann.
5. Durch die Differenz in X und Y des Mittelpunktes des approximierten Hilfskreises und den Mittelpunkt der Sollposition des Farbmessfeldes kann dann der Rechner 16 das Seiten- und Umfangsregister 2, 3 bestimmen, sh. auch Figur 11.

### Vorteil beider bevorzugten Ausführungsvarianten ist:

1. Die Erfindung kommt ohne spezielle Registermessfelder aus. Damit kann der Platz für die Registermessfelder anderweitig genutzt werden. Es gibt viele Einsatzfälle bei denen eine solche Platzeinsparung dazu führt, dass eine Nutzenreihe mehr gedruckt kann.
2. Außerdem wird die Genauigkeit der Registermessung erhöht, da das Register 2, 3 in sehr vielen Feldern gleichzeitig gemessen werden kann und diese Messwerte zusätzlich gemittelt werden können.

### Bezugszeichenliste

- 1: Farbkontrollstreifen
- 1a: Farbkontrollstreifen mit angepasster Messfeld-Reihenfolge
- 1b: Farbkontrollstreifen mit angepasster Messfeld-Reihenfolge und Seitenregisterversatz in Cyan und Magenta
- 2: Seitenregister(-versatz)
- 2a, 2b, 2c, 2d: Seitenregisterversatz für Cyan und Magenta
- 3: Umfangsregister(-versatz)
- 4, 5: durch Seitenregisterversatz von Cyan verursachter Überdruck
- 6: Modifizierter Farbkontrollstreifen mit kreisrunden Farbmessfeldern
- 7a, 7b, 7c, 7d: Umsatz und Seitenregisterversätze von Cyan, Magenta und Yellow
- 8: zu bewertendes Farbmessfeld Yellow
- 9: segmentiertes Farbmessfeld Yellow
- 10: segmentiertes Farbmessfeld Yellow mit Hilfskreis
- 11: Anwender
- 12: Bilderfassungssystem
- 13: Steuerungsrechner
- 14: Druckmaschine
- 15: Bildsensor
- 16: Bildverarbeitungsrechner
- 17: Display
- 18: Farbmessfeld Schwarz (K)

## Patentansprüche

1. Verfahren zur automatisierten Registermessung von Farbauszügen in einem Druckprozess einer Druckmaschine (14) durch einen Rechner (13, 16), wobei durch mindestens einen Bildsensor (15) mindestens ein Testmuster (1) erfasst und in einem digitalen Gesamtbild gespeichert wird, der Rechner (13, 16) das erfasste Testmuster (1) hinsichtlich eines Registerversatzes (2, 3) auswertet und diesen korrigiert, wobei der Rechner (13, 16) als Testmuster (1) einen Farbkontrollstreifen (1) verwendet und die Farbmessfelder des Farbkontrollstreifens (1) so anpasst, dass der Rechner (13, 16) aus dem mittels Bildsensor (15) erfassten und digitalisierten, angepassten Farbkontrollstreifen (1a, 1b, 6) Umfangs- und Seitenregisterversatz (2, 3) ermittelt werden können
**dadurch gekennzeichnet,**
**dass** der Rechner (13, 16) zur Messung des Seitenregisterversatzes die Reihenfolge der Farbmessfelder des Farbkontrollstreifens (1a, 1b, 6) auf die Sichtbarkeit eines Übereinanderdrucks der Farbmessfelder anpasst.

2. Verfahren nach Anspruch 1,
**dadurch gekennzeichnet,**
**dass** der Rechner (13, 16) den Umfangsregisterversatz (3) durch Messung eines vertikal zum Farbkontrollstreifen (1a, 1b, 6) auftretenden Höhenversatzes eines Farbmessfeldes im digitalisierten Farbkontrollstreifen (1a, 1b, 6) ermittelt.

3. Verfahren nach einem der vorherigen Ansprüche,
**dadurch gekennzeichnet,**
**dass** für jeden Farbauszug mehrere Farbmessfelder und/oder Farbkontrollstreifen (1a, 1b, 6) gedruckt, erfasst, digitalisiert und vom Rechner (13, 16) ausgewertet werden um eine Mittelung der Ergebnisse über mehrere Farbmessfelder zu gewährleisten.

4. Verfahren nach einem der vorherigen Ansprüche,
**dadurch gekennzeichnet,**
**dass** rechteckig geformte Farbmessfelder gedruckt, erfasst, im digitalen Gesamtbild gespeichert und ausgewertet werden.

5. Verfahren nach einem der Ansprüche 1 bis 3,
**dadurch gekennzeichnet,**
**dass** runde Farbmessfelder gedruckt, erfasst, im digitalen Gesamtbild gespeichert und ausgewertet werden.

6. Verfahren nach Anspruch 5,
**dadurch gekennzeichnet,**
**dass** die runden Farbmessfelder ausgewertet werden, indem der Rechner (13, 16) ein Teilbild aus dem erfassten digitalen Gesamtbild ausschneidet, welches das Farbmessfeld (8) für den zu messenden Farbauszug und die rechts und links anschließenden Farbauszüge enthält, das Teilbild in drei Objekte segmentiert, durch die konkaven Kreisteile des mittleren Objektes (9) einen Hilfskreis legt und durch die Differenz der Lage des Mittelpunktes des Hilfskreises und des Mittelpunkt einer bekannten Sollposition des runden Farbmessfeldes das Seiten- und Umfangsregister (2, 3) ermittelt.

7. Verfahren nach Anspruch 6,
**dadurch gekennzeichnet,**
**dass** die Segmentierung des Teilbildes in drei Objekte mittels des Rechners (13, 16) durch einen Watershed-Algorithmus geschieht und/oder der Durchmesser des Hilfskreises vorher fest definiert wird.

8. Verfahren nach einem der Ansprüche 6 bis 7,
**dadurch gekennzeichnet,**
**dass** die Sollposition des Farbmessfeldes (8) durch die Lage der nächsten, angrenzenden schwarzen Farbmessfelder (18) bestimmt wird.

9. Verfahren nach einem der vorherigen Ansprüche,
**dadurch gekennzeichnet,**
**dass** zur Erfassung und Digitalisierung der Testmuster (1) ein Inline-Bilderfassungssystem (12) in der Druckmaschine (14) verwendet wird, welches mindestens eine Kamera (15) aufweist.

## Claims

1. Method of automated register measurement on colour separations in a printing operation of a printing machine (14) by means of a computer (13, 16), wherein at least one test chart (1) is recorded by at least one image sensor (15) and saved in a digital total image, wherein the computer (13, 16) analyzes the recorded test chart (1) in terms of a register offset (2, 3) and corrects the latter, wherein the computer (13, 16) uses a colour control strip (1) as the test chart (1) and adapts the colour measurement fields in the colour control strip (1) in such a way that the computer (13, 16) may detect circumferential and lateral register offsets (2, 3) based on the adapted colour control strip (1a, 1b, 6) that has been recorded and digitized by means of the image sensor (15),
**characterized**
**in that** in order to measure the lateral register offset, the computer (13, 16) adapts the order of the colour measurement fields of the colour control strip (1a, 1b, 6) to the visibility of an overprinting of the colour measurement fields.

2. Method according to claim 1,
**characterized**
**in that** the computer (13, 16) determines the circumferential register offset (3) by measuring a height offset of a colour measurement field in the digitized colour control strip (1a, 1b, 6) in a direction vertical to the colour control strip (1a, 1b, 6).

3. Method according to any one of the preceding claims,
**characterized**
**in that** for every colour separation, multiple colour measurement fields and/or colour control strips (1a, 1b, 6) are printed, recorded, digitized and analyzed by the computer (13, 16) to ensure that the results are averaged over multiple colour measurement fields.

4. Method according to any one of the preceding claims,
**characterized**
**in that** rectangular-shape colour measurement fields are printed, recorded, saved in the digital total image, and analyzed.

5. Method according to any one of claims 1 to 3,
**characterized**
**in that** circular colour measurement fields are printed, recorded, saved in the digitial total image, and analyzed.

6. Method according to claim 5,
**characterized**
**in that** the circular colour measurement fields are analyzed in that the computer (13, 16) cuts an image part containing the colour measurement field (8) for the colour separation to be measured and the adjoining colour separations to the right and to the left out of the recorded digital total image, segments the image part into three objects, places an auxiliary circle through the concave circle parts of the middle object (9), and determines the lateral and circumferential registers (2, 3) based on the difference between the position of the centre of the auxiliary circle and the center of a known target position of the circular colour measurement field.

7. Method according to claim 6,
**characterized**
**in that** the segmentation of the image part into three objects by means of the computer (13, 16) is done by a Watershed algorithm and/or in that the diameter of the auxiliary circle is fixedly defined in advance.

8. Method according to any one of claims 6 to 7,
**characterized**
**in that** the target position of the colour measurement field (8) is determined by the location of the next adjoining black colour measurement fields (18).

9. Method according to any one of the preceding claims,
**characterized**
**in that** an inline image recording system (12) provided in the printing machine (14) and including at least one camera (15) is used to record and digitize the test charts (1).

## Revendications

1. Procédé de mesure automatisée de registres de sélections chromatiques dans un processus d'impression d'une machine à imprimer (14) par un ordinateur (13, 16), pour lequel au moins un échantillon de test (1) est enregistré par au moins un capteur d'image (15) et mémorisé dans une image globale numérique, l'ordinateur (13, 16) évaluant l'échantillon de test (1) enregistré pour un décalage de registre (2, 3) et le corrigeant, pour lequel l'ordinateur (13, 16) utilise une bande de contrôle des couleurs (1) comme échantillon de test (1) et adapte les champs de mesure de couleur de la bande de contrôle des couleurs (1) de sorte que l'ordinateur (13, 16) puisse déterminer des décalages de registre circonférentiel et latéral (2, 3) à partir de la bande de contrôle des couleurs adaptée (1a, 1b, 6), enregistrée et numérisée au moyen du capteur d'image (15)
**caractérisé en ce**
**que** l'ordinateur (13, 16) de mesure du décalage de registre latéral adapte la séquence des champs de mesure de la couleur de la bande de contrôle des couleurs (1a, 1b, 6) en fonction de la visibilité d'une surimpression des champs de mesure chromatique.

2. Procédé selon la revendication 1,
**caractérisé en ce**
**que** l'ordinateur (13, 16) détermine le décalage de registre circonférentiel (3) par mesure d'un décalage en hauteur d'un champ de mesure de couleur dans la bande de contrôle des couleurs numérisée (1a, 1b, 6) se produisant verticalement par rapport à la bande de contrôle des couleurs (1a, 1b, 6).

3. Procédé selon l'une des revendications précédentes,
**caractérisé en ce**
**que** plusieurs champs de mesure des couleurs et/ou bandes de contrôle des couleurs (1a, 1b, 6) sont imprimés, enregistrés, numérisés et évalués par l'ordinateur (13, 16) pour chaque sélection chromatique, afin d'assurer la formation d'une moyenne des résultats pour plusieurs champs de mesure chromatique.

4. Procédé selon l'une des revendications précédentes,
**caractérisé en ce**
**que** des champs de mesure chromatique de forme rectangulaire sont imprimés, enregistrés, mémorisés dans l'image numérique globale et évalués.

5. Procédé selon l'une des revendications 1 à 3,
**caractérisé en ce**
**que** des champs de mesure chromatique de forme ronde sont imprimés, enregistrés, mémorisés dans l'image numérique globale et évalués.

6. Procédé selon la revendication 5,
**caractérisé en ce**
**que** les champs de mesure chromatique ronds sont évalués par l'ordinateur (13, 16), qui découpe une image partielle de l'image numérique globale enregistrée, cette image partielle contenant le champ de mesure chromatique (8) pour la sélection chromatique à mesurer et les sélections chromatiques suivantes à droite et à gauche, segmente l'image partielle en trois objets, définit un cercle auxiliaire via les parties circulaires concaves de l'objet central (9) et détermine le registre latéral et circonférentiel (2, 3) via la différence de la position du point central du cercle auxiliaire et du point central d'une position de consigne connue du champ de mesure chromatique rond.

7. Procédé selon la revendication 6,
**caractérisé en ce**
**que** la segmentation de l'image partielle en trois objets est effectuée par l'ordinateur (13, 16) au moyen d'un algorithme Watershed et/ou que le diamètre du cercle auxiliaire est défini au préalable de manière fixe.

8. Procédé selon l'une des revendications 6 à 7,
**caractérisé en ce**
**que** la position de consigne du champ de mesure chromatique (8) est déterminée par la position des champs de mesure chromatiques noirs (18) voisins.

9. Procédé selon l'une des revendications précédentes,
**caractérisé en ce**
ce qu'un système d'enregistrement d'images en ligne (12), comportant au moins une caméra (15), est utilisé dans la machine à imprimer (14) pour l'enregistrement et la numérisation des échantillons de test (1).
